# FASCICULE DE BREVET EUROPEEN

(11) **EP 3 850 301 B1**
(45) Date de publication et mention de la délivrance du brevet: **14.06.2023**
(21) Numéro de dépôt: 19753168.4
(22) Date de dépôt: 17.07.2019
(51) Int. Cl.: G01B 11/06

(54) **SYSTÈME EMBARQUÉ ET PROCÉDÉ DE MESURE DE HAUTEUR DE CHARGEMENT D'UN CONVOI ROUTIER**
BORDSYSTEM UND VERFAHREN ZUR MESSUNG DER LASTHÖHE EINES STRASSENKONVOIS
ONBOARD SYSTEM AND METHOD FOR MEASURING THE LOADING HEIGHT OF A ROAD CONVOY

(30) Priorité: 13.09.2018 FR 1858220
(43) Date de publication de la demande: 21.07.2021
(73) Titulaire: Lohr Industrie, 67980 Hangenbieten (FR)
(72) Inventeur: GATOU, Mike, 67000 STRASBOURG (FR); DENIS, Romain, 67310 WASSELONNE (FR); KARNOUKIAN, Marc, 67140 BARR (FR)
(74) Mandataire: Merckling, Norbert
(86) Numéro de dépôt international: PCT/FR2019/051801
(87) Numéro de publication internationale: WO 2020/053493

(56) Documents cités:
- DE-A1- 19 813 134
- DE-A1-102013 012 314
- FR-A1- 2 745 900
- US-A1- 2004 075 847
- US-A1- 2008 244 921

## Description

### Domaine technique

La présente invention se rapporte au domaine technique des systèmes embarqués prévus pour mesurer la hauteur de chargement d'un convoi routier comprenant un véhicule tracteur et une remorque ou une semi-remorque.

L'invention concerne un système embarqué de mesure de gabarit d'un convoi routier comprenant un mât télescopique vertical équipé au niveau de son extrémité supérieure d'un dispositif optique pour la visualisation de la hauteur de chargement.

L'invention concerne également un procédé d'utilisation dudit système prévu pour mesurer la hauteur de chargement d'un convoi routier.

### Etat de la technique

Dans le cas de transport de marchandise sur des plateformes non fermées, le chargement fait le gabarit. Il est donc nécessaire voire obligatoire de mesurer la hauteur de chargement pour respecter la réglementation ou tout simplement pour s'assurer que le convoi puisse passer sous les ponts.

Par hauteur de chargement, on entend la hauteur globale - ou gabarit - d'un convoi routier, qui s'étend du sol jusqu'au point le plus haut du chargement transporté par ledit convoi.

Ce besoin est particulièrement important dans le transport de voitures pour lequel une toise mécanique en appui sur le sol est habituellement utilisée, et pour lequel un dispositif plus performant ayant fait l'objet de la demande de brevet française n° 2745900 A1 a été développé.

Dans ce dispositif, un moyen de détection et de visée sous la forme d'un laser est monté pivotant dans un plan vertical au sommet d'un bras vertical formé de deux tubes coulissants télescopiques et fixé sur le véhicule porte-voitures. La hauteur et l'orientation angulaire du laser sont ajustées et bloquées manuellement de sorte que le laser pointe la partie la plus haute du chargement. La hauteur de ce dernier est alors lue par l'opérateur au moyen de graduations métriques prévues sur les deux tubes coulissants.

Malgré sa simplicité, le dispositif divulgué dans la demande française n° 2745900 A1 présente de nombreux désavantages.

Son utilisation nécessite des opérations de réglage manuel en hauteur et en orientation angulaire du laser, impliquant en outre que l'opérateur grimpe sur le véhicule de transport. Il s'agit d'opérations longues et fastidieuses pouvant éventuellement entraîner des risques de chute ou de blessure pour l'opérateur qui doit évoluer dans un environnement qui n'est pas prévu pour une circulation sécuritaire.

De même, la lecture et les opérations de réglage et de visée sont effectuées par un opérateur qui est habituellement un chauffeur routier. Ce dernier n'a pas toujours la rigueur nécessaire pour effectuer correctement les mesures et les réglages nécessaires et il en résulte un risque d'erreur de la mesure de hauteur de chargement. Il est d'ailleurs notoire qu'un laser se reflète sur les parebrises des véhicules et qu'il ne s'agit par conséquent pas d'un moyen adapté pour mesurer une hauteur de chargement lorsque ledit chargement est constitué de voitures.

En outre, la lecture des graduations métriques n'est permise qu'avec une luminosité suffisante, et une mauvaise visibilité peut empêcher l'opérateur de pointer avec précision le point haut du chargement avec le laser.

Enfin, la mesure de la hauteur de chargement n'est pas précise car elle repose sur le postulat que le tube coulissant qui est fixé au véhicule porte-voitures se trouve toujours à la même hauteur par rapport au sol. Or ce postulat est bien entendu erroné, car la hauteur globale du véhicule porte-voitures par rapport au sol dépend entre autre de l'état de gonflage de ses pneumatiques, de l'affaissement des suspensions dues au poids global du chargement, de la planéité du sol et de l'assiette verticale du véhicule. En effet, notamment dans le cas où le sol n'est pas parfaitement plat, le véhicule de tête et/ou le véhicule attelé est susceptible d'être localement surélevé par rapport au sol, ce qui fausse la mesure de hauteur de chargement.

En outre, le dispositif décrit dans la demande de brevet française n° 2745900 A1 ne permet pas, de contrôler la hauteur d'un obstacle ou d'un passage tel qu'un pont ou d'un tunnel avant d'y circuler.

### Description de l'invention

L'objet de la présente invention vise par conséquent à pallier les inconvénients de l'art antérieur en proposant un nouveau système embarqué comprenant un dispositif optique prévu pour mesurer la hauteur de chargement d'un convoi routier de façon fiable dans toute situation. Un autre objet de la présente invention vise à fournir un système dont le fonctionnement est préférentiellement mécanisé, automatisé et pilotable à distance.

Un objet supplémentaire de la présente invention vise à proposer un nouveau procédé de mesure précis et fiable de la hauteur de chargement d'un convoi routier.

Les objets assignés à l'invention sont atteints à l'aide d'un procédé de mesure de gabarit d'un convoi routier transportant un chargement et comprenant un véhicule de tête et au moins un véhicule attelé suiveur, ledit procédé étant caractérisé en ce qu'il utilise un système embarqué de mesure de gabarit comprenant un mât télescopique vertical équipé au niveau de son extrémité supérieure d'un dispositif optique comprenant un système optique d'imagerie numérique, et en ce qu'il comprend les étapes suivantes :
a) déplacement du dispositif optique en translation verticale vers le haut depuis sa position basse rétractée jusqu'en position haute de mesure ;
b) prise en images par le système optique d'imagerie numérique d'au moins la partie supérieure du véhicule du convoi routier dont on souhaite mesurer la hauteur de chargement ;
c) détermination, par l'utilisateur ou par un logiciel de traitement d'image, de la hauteur de chargement dudit véhicule à partir des images obtenues lors de l'étape b) ;
d) calcul du gabarit du convoi routier à partir de la distance par rapport au sol du système optique d'imagerie numérique et de la hauteur de chargement déterminée à l'étape c).

Ce procédé permet avantageusement de mesurer la hauteur de chargement et de calculer le gabarit du convoi routier par une prise d'images numériques depuis un point haut situé sensiblement à la même hauteur que le point haut du convoi routier, pour une meilleure précision et une position de prise de vue adaptée pour déterminer la hauteur de chargement d'un véhicule.

Selon une variante du procédé de l'invention, celui-ci comprend les étapes successives supplémentaires suivantes prévues avant l'étape b) :
- détermination de l'inclinaison relative en tangage entre le véhicule de tête et le véhicule attelé ;
- inclinaison en élévation du système optique d'imagerie numérique de sorte que son axe central optique soit parallèle à l'axe longitudinal dans lequel se prolonge le véhicule du convoi routier dont on souhaite mesurer la hauteur de chargement.

Ce procédé permet avantageusement de mesurer la hauteur de chargement et de calculer le gabarit du convoi routier tout en inclinant le dispositif optique en élévation afin de tenir compte de l'inclinaison relative en tangage entre les deux véhicules du convoi routier dont on souhaite mesurer la hauteur de chargement. Ainsi, le calcul du gabarit du convoi routier est précis et fiable.

Selon une autre variante du procédé de l'invention, celui-ci comprend l'étape supplémentaire suivante prévue avant l'étape d) :
i) mesure de la distance réelle du mât télescopique par rapport au sol pour déterminer la distance par rapport au sol du système optique d'imagerie numérique.

Ainsi, le dispositif optique de mesure gagne en précision dans la mesure du gabarit, notamment dans le cas de variation de l'état de gonflage des pneumatiques du convoi routier ou de l'affaissement de ses suspensions dues au poids du chargement.

Selon une variante supplémentaire du procédé de l'invention, celui-ci comprend les étapes supplémentaires suivantes venant en remplacement de l'étape d) :
α) pivotement du dispositif optique à 360° autour de son axe vertical de pivotement ;
β) prise en images par le système optique d'imagerie numérique d'au moins la partie supérieure du véhicule du convoi routier distinct du véhicule dont on a déterminé la hauteur de chargement au cours de l'étape c) ;
γ) détermination, par l'utilisateur ou par un logiciel de traitement d'image, de la hauteur de chargement dudit véhicule à partir des images obtenues lors de l'étape β) ;
δ) calcul du gabarit du convoi routier à partir de la distance par rapport au sol du système optique d'imagerie numérique et des hauteurs de chargement déterminées lors des étapes c) et γ).

Selon cette dernière variante, l'invention permet donc avantageusement de mesurer le gabarit du convoi routier en tout point de celui-ci, c'est-à-dire soit vers l'avant et vers l'arrière.

Il est à noter que ce pivotement du dispositif optique à 360° permet également au système de l'invention d'être utilisé pour mesurer la hauteur d'un obstacle situé sur la route.

Selon une autre variante du procédé de l'invention, il comprend l'étape supplémentaire suivante prévue après l'étape d) ou δ) :
e) affichage en réalité augmentée du gabarit (G) sur au moins une des images obtenues par le système optique (9) d'imagerie numérique, cet affichage étant sous la forme d'une représentation virtuelle destinée à l'opérateur.

Cette étape permet avantageusement à l'opérateur d'avoir un aperçu du gabarit pour mieux se rendre compte de celui-ci.

Selon une variante supplémentaire du procédé de l'invention, au cours des étapes c) et/ou γ) des algorithmes de traitement d'image effectuent les opérations successives suivantes :
- classement de manière automatique des régions de l'image qui contiennent une ou plusieurs des charges provenant du chargement du convoi ;
- identification parmi les régions ainsi classées celle qui appartient à la charge la plus haute du convoi ;
- extraction des contours de ladite charge la plus haute de cette région à partir de la région qui appartient à la charge la plus haute du convoi ; et
- détermination des coordonnées en pixels dans l'image du pixel ou du centroïde du groupe de pixels qui désigne le point le plus haut du chargement.

Ces algorithmes de traitement d'image fournissent un moyen de détection et de mesure efficace du point le plus haut du chargement en vue du calcul du gabarit du convoi routier.

Selon une autre variante du procédé de l'invention, les coordonnées en pixels dans l'image du pixel ou du centroïde du groupe de pixels qui désigne le point le plus haut du chargement sont fournies par un dispositif électronique à un ensemble électromécanique du mât télescopique comprenant un dispositif de déplacement réalisant le déplacement du dispositif optique en translation verticale afin que ledit ensemble électromécanique positionne le centre optique du système optique d'imagerie numérique sur la coordonnée du pixel ou centroïde représentant l'élément le plus haut du convoi.

Ainsi, le système optique d'imagerie numérique peut mesurer avec précision la hauteur du point le plus haut du chargement en vue du calcul du gabarit du convoi routier.

Selon une variante supplémentaire du procédé de l'invention, le classement automatique des régions de l'image qui contiennent une ou plusieurs des charges provenant du chargement repose sur un traitement d'image qui, à partir d'une image d'entrée, délimite des zones obéissant à au moins un même critère choisi. Cette méthode de traitement d'image permet de gagner en temps et en précision lors du classement automatique des régions de l'image qui contiennent une ou plusieurs des charges provenant du chargement.

Selon une variante du procédé de l'invention, les algorithmes de traitement d'image exploitent une base de données d'images afin de déterminer parmi un jeu de critères, celui ou ceux qui permettent) d'identifier le type de charge recherché. Ceci permet là encore de gagner en temps et en précision lors du classement des images.

Selon une autre variante du procédé de l'invention, celui-ci utilise un algorithme qui calcule l'erreur ou l'écart entre la position courante du centre optique du système optique et la coordonnée à atteindre et qui élabore une loi de commande du dispositif de déplacement en translation verticale de l'ensemble électromécanique à partir de cette erreur de position et du modèle cinématique du système, loi de commande générant les déplacements du système optique pour minimiser ou annuler l'erreur de position précédemment définie.

Cet algorithme de calcul d'erreur ou d'écart améliore avantageusement la mesure de la hauteur du point le plus haut du chargement effectuée par le système optique.

Les objets assignés à l'invention sont également atteints à l'aide d'un système embarqué de mesure prévu pour mettre en oeuvre le procédé décrit précédemment, ledit système comprenant un mât télescopique vertical équipé au niveau de son extrémité supérieure d'un dispositif optique comprenant un système optique d'imagerie numérique, ledit système étant caractérisé en ce que :
- le mât télescopique est fixé sur un des véhicules du convoi routier, à une distance par rapport au sol faisant office de hauteur de référence pour le calcul du gabarit ;
- le mât télescopique comporte un ensemble électromécanique qui comprend un dispositif de déplacement du dispositif optique en translation verticale entre une position basse rétractée et au moins une position haute de mesure ;
- le système embarqué de mesure comprend un dispositif électronique qui pilote et communique avec le système optique d'imagerie numérique et l'ensemble électromécanique du mât télescopique, qui commande les déplacements et le fonctionnement du dispositif optique.

L'usage d'un système optique d'imagerie numérique ne présente pas les désavantages d'un pointeur laser et permet d'obtenir une image qui peut être analysée par le dispositif électronique ou par l'utilisateur.

Le système embarqué de mesure selon l'invention permet avantageusement de réaliser des prises de vue d'image numériques depuis un point haut situé sensiblement à la même hauteur que le point haut du convoi routier, pour une meilleure précision et une position de prise de vue adaptée pour déterminer la hauteur de chargement d'un véhicule. En outre, le système selon l'invention permet de motoriser de façon précise les déplacements du dispositif optique. Le dispositif électronique permet de piloter et d'automatiser au moins partiellement le procédé de mesure de gabarit.

Selon un exemple de mise en oeuvre de l'invention, le système comprend en outre un dispositif de détermination de l'inclinaison relative en tangage entre le véhicule de tête et le véhicule attelé, et ledit dispositif de détermination de l'inclinaison relative communique avec le dispositif électronique. Cela permet avantageusement de détecter si le véhicule de tête et le véhicule attelé sont coplanaires ou non, et dans le cas où ils ne sont pas coplanaires, cela permet de mesure l'angle d'inclinaison en tangage entre ces deux véhicules.

Selon un autre exemple de mise en oeuvre de l'invention, le dispositif de détermination de l'inclinaison relative en tangage entre le véhicule de tête et le véhicule attelé comprend :
- un premier inclinomètre destiné à être fixé sur le véhicule de tête et un second inclinomètre destiné à être fixé sur le véhicule attelé ; ou
- un codeur de mesure d'inclinaison destiné à équiper l'articulation reliant le véhicule de tête au véhicule attelé.

Selon un exemple supplémentaire de mise en oeuvre de l'invention, les faits suivants s'appliquent :
- l'ensemble électromécanique du mât télescopique comprend un dispositif de déplacement en pivotement angulaire dans un plan vertical qui incline le système optique d'imagerie numérique en élévation, ledit dispositif de déplacement communiquant avec le dispositif électronique et étant piloté par celui-ci ;
- le système optique d'imagerie numérique comprend soit un troisième inclinomètre, soit un codeur de mesure d'inclinaison, qui détermine l'angle d'inclinaison en élévation du système optique d'imagerie numérique, ce troisième inclinomètre ou ce codeur de mesure d'inclinaison communiquant avec le dispositif électronique.

Ainsi, le système selon l'invention permet d'aligner l'axe de prise de vue du système optique d'imagerie numérique avec le véhicule dont il veut mesurer la hauteur de chargement, ce qui permet une détermination précise et fiable du gabarit du convoi routier en corrigeant l'éventuelle non coplanarité des deux véhicules.

Selon un exemple de mise en oeuvre de l'invention, l'ensemble électromécanique du système embarqué de mesure comprend un dispositif de déplacement en pivotement angulaire dans un plan horizontal qui fait pivoter le système optique d'imagerie numérique en azimut, ledit dispositif de déplacement communiquant avec le dispositif électronique et étant piloté par celui-ci.

Ainsi, le dispositif optique de mesure peut effectuer un balayage du chargement dans un plan horizontal pour s'assurer d'en mesurer le point le plus haut, notamment si celui-ci est décalé latéralement.

Selon un autre exemple de mise en oeuvre de l'invention, le dispositif de déplacement du dispositif optique en pivotement angulaire dans un plan horizontal est adapté pour orienter le système optique d'imagerie numérique à 360° autour de son axe vertical de pivotement.

Ce pivotement permet notamment au système de mesurer la hauteur de chargement des deux véhicules du convoi routier et d'orienter le dispositif optique vers l'avant du véhicule afin de l'utiliser pour mesurer la hauteur d'un obstacle ou d'un passage tel qu'un pont ou d'un tunnel avant d'y circuler.

On notera en outre que les différents dispositifs de déplacement et le dispositif électronique permettent avantageusement d'automatiser et/ou de commander le fonctionnement du système. Son fonctionnement en est simplifié et il est également plus fiable que les systèmes manuels.

Selon un exemple supplémentaire de mise en oeuvre de l'invention, le système embarqué de mesure comprend en outre au moins un dispositif de mesure de hauteur par rapport au sol destiné à être monté sur le véhicule de tête et/ou le véhicule attelé suiveur et qui calcule la distance réelle du mât télescopique par rapport au sol faisant office de hauteur de référence pour le calcul du gabarit, ce dispositif de mesure communiquant avec le dispositif électronique et étant piloté par celui-ci.

Ainsi, le dispositif optique de mesure gagne en précision dans la mesure du gabarit, notamment dans le cas de variation de l'état de gonflage des pneumatiques du convoi routier ou de l'affaissement de ses suspensions dues au poids du chargement.

Selon un exemple de mise en oeuvre de l'invention, le dispositif de mesure de hauteur par rapport au sol comprend un capteur optique qui mesure la distance le séparant du sol ou un capteur de pression qui mesure la pression dans les soufflets de suspension du véhicule de tête et/ou du véhicule attelé suiveur, le dispositif électronique déduisant l'affaissement des suspensions à partir des pressions mesurées.

Ainsi, même pour les véhicule du convoi routier l'assiette, l'inclinaison en tangage et la variation de hauteur par rapport au sol est susceptible d'être peu remarquable, ces valeurs peuvent être mesurées afin de tenir compte de toute ces variations pour l'ensemble du convoi routier et de calculer le gabarit de celui-ci avec une très grande précision.

Selon un autre exemple de mise en oeuvre de l'invention, le système embarqué de mesure comprend une interface homme-machine qui pilote et communique avec le dispositif électronique. Qu'elle soit par exemple prévue fixe dans la cabine de conduite, ou mobile sous la forme d'un dispositif portable, cette interface homme-machine permet avantageusement à l'utilisateur de commander la totalité du système à distance et d'obtenir de celui-ci les informations dont il a besoin pour conduire le convoi routier de manière sécuritaire et réglementaire.

L'interface homme-machine est préférentiellement une tablette qui affiche notamment les images prises par le système optique d'imagerie numérique et le gabarit du convoi routier calculé par le dispositif électronique. Une telle interface permet avantageusement d'afficher pour l'utilisateur les images et vidéos provenant du système optique d'imagerie numérique, ainsi que les différentes valeurs géométriques et mathématiques obtenues et calculées par le dispositif électronique, tout en permettant à l'utilisateur de commander la totalité du système à distance de manière tactile.

Selon un exemple supplémentaire de mise en oeuvre de l'invention, le système optique d'imagerie numérique du Système embarqué de mesure comporte des LED infrarouges, ce qui lui permet de voir la charge transportée et les éventuels obstacles, même la nuit.

Les objets assignés à l'invention sont également atteints à l'aide d'un programme d'ordinateur comprenant des instructions de code de programme pour l'exécution des étapes du procédé décrit précédemment lorsque ledit programme d'ordinateur est exécuté sur un ordinateur. Cet ordinateur peut être constitué par le dispositif électronique du système ou faire partie de celui-ci.

Avantageusement, le système embarqué de l'invention et son procédé d'utilisation permettent d'autres applications, notamment celle de permettre de contrôler la hauteur d'un obstacle ou d'un passage tel qu'un pont ou d'un tunnel avant d'y circuler, ou celle de piloter les vérins de convois porte-voitures afin de respecter les limites réglementaires de gabarit.

### Brève description des dessins

D'autres caractéristiques et avantages de la présente invention apparaîtront plus clairement à la lecture de la description qui va suivre, faite en référence aux dessins annexés, donnés à titre d'exemples non limitatifs, dans lesquels :

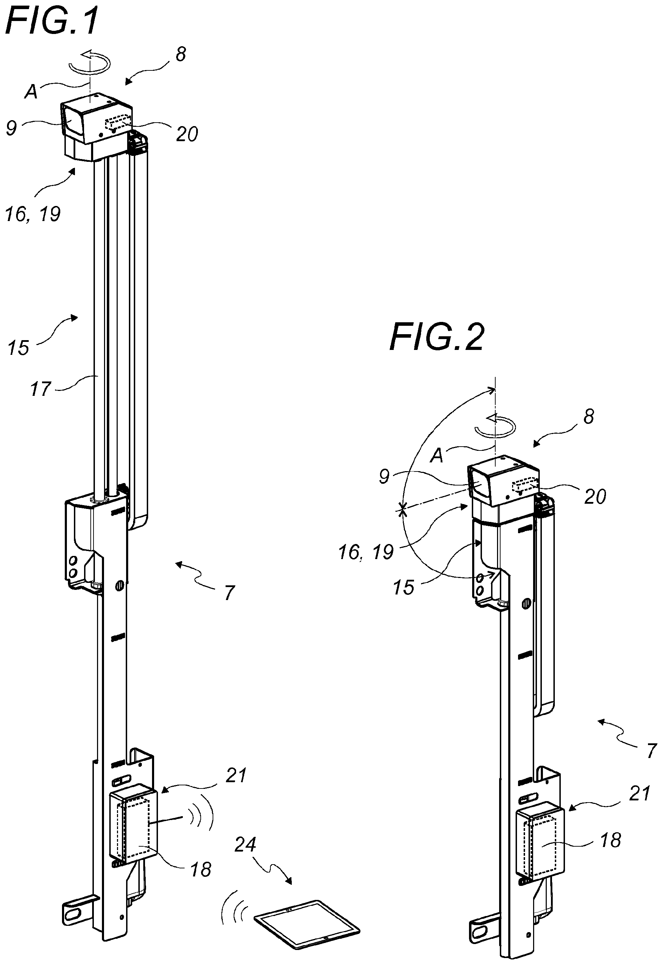

- la figure 1 est une vue en perspective d'un mât télescopique vertical selon l'invention dont le dispositif optique est en position haute de mesure ;
- la figure 2 est une vue en perspective d'un mât télescopique vertical selon l'invention dont le dispositif optique est en position basse rétractée ;

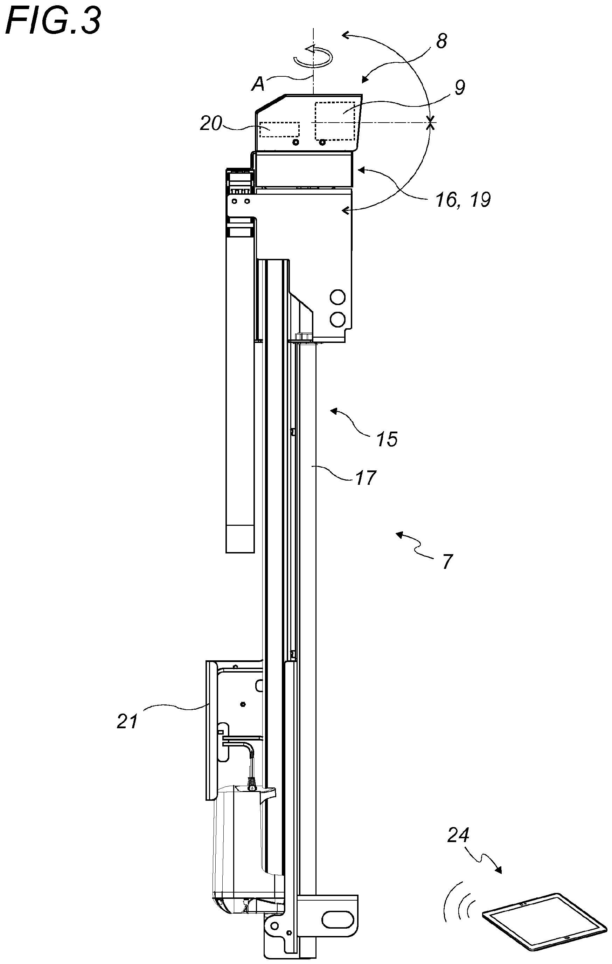

- la figure 3 est une vue de profil d'un mât télescopique vertical selon l'invention dont le dispositif optique est en position basse rétractée ;

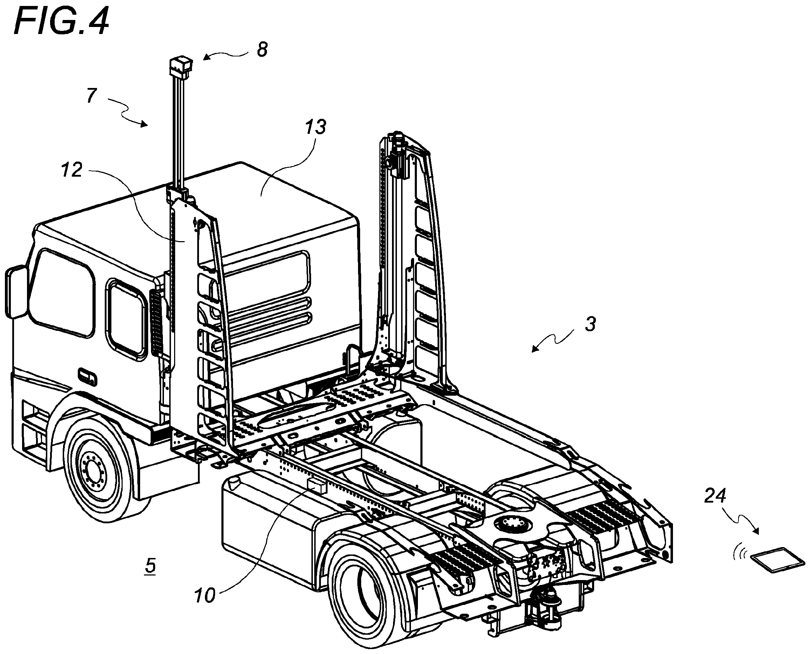

- la figure 4 est une vue en perspective d'un véhicule tracteur équipé d'un mât télescopique vertical selon l'invention en position haute de mesure ; et
- la figure 5 est une vue schématique de profil d'un convoi routier équipé du système selon l'invention, dans lequel la semi-remorque est inclinée en tangage vers le bas par rapport au véhicule tracteur.

### Mode(s) de réalisation de l'invention

Les éléments structurellement et fonctionnellement identiques présents sur plusieurs figures distinctes, sont affectés d'une même référence numérique ou alphanumérique.

Le système embarqué de mesure (1) de gabarit (G) selon l'invention est prévu pour équiper un convoi routier (2) comprenant un véhicule de tête (3) et au moins un véhicule attelé (4) suiveur. Le véhicule de tête (3) peut-être un camion ou un tracteur, tandis que le véhicule attelé (4) peut-être une remorque ou une semi-remorque. L'invention s'adresse tout particulièrement à des convois routiers (2) de type porte-voitures.

Par gabarit (G) on entend la hauteur du convoi routier (2) entre son point le plus bas, généralement au niveau du sol (5), et son point le plus haut par rapport au sol (5), c'est-à-dire le point le plus élevé du chargement (6) du convoi routier (2).

Le système (1) de mesure selon l'invention comprend un mât télescopique (7) vertical équipé au niveau de son extrémité supérieure d'un dispositif optique (8) pour la visualisation de la hauteur de chargement (C).

Le dispositif optique (8) comprend un système optique (9) d'imagerie numérique. Il s'agit préférentiellement d'une caméra ou d'un appareil photo qui prend le chargement (6) en images. En effet, ce type de système optique (9) d'imagerie numérique permet d'obtenir des images numériques de qualité suffisante pour être traitées et/ou analysées afin d'en déduire une hauteur de chargement (C). Cette analyse des images peut être effectuée visuellement par un utilisateur, ou de manière électronique par un logiciel de traitement d'image.

Les images prises par le système optique (9) d'imagerie numérique peuvent être des photographies ou des vidéos. Cette prise d'image peut être ponctuelle ou continue.

On notera que le dispositif optique (8) ne peut pas mesurer directement le gabarit (G) du convoi routier (2). Il mesure en fait une hauteur à laquelle se trouve le point le plus haut du chargement par rapport à un point de référence, ce point de référence pouvant par exemple être située au niveau de la base du mât télescopique (7).

Ainsi, en connaissant la hauteur de référence (R) entre le sol (5) et le point de référence du système (1), et la hauteur de chargement (C) mesurée par le dispositif optique (8) entre le point de référence du système (1) et le point le plus haut du convoi routier (2), il est possible de calculer le gabarit (G) du convoi routier (2) par simple addition de la hauteur de référence (R) et de la hauteur de chargement (C).

Lorsque le sol sur lequel se trouve le convoi routier (2) n'est pas plat, afin de mesurer le gabarit (G) avec précision, il est cependant nécessaire de connaître l'angle (α) d'inclinaison relative entre le plan du véhicule de tête (3) et celui du véhicule attelé (4) dans l'axe de tangage du convoi routier (2).

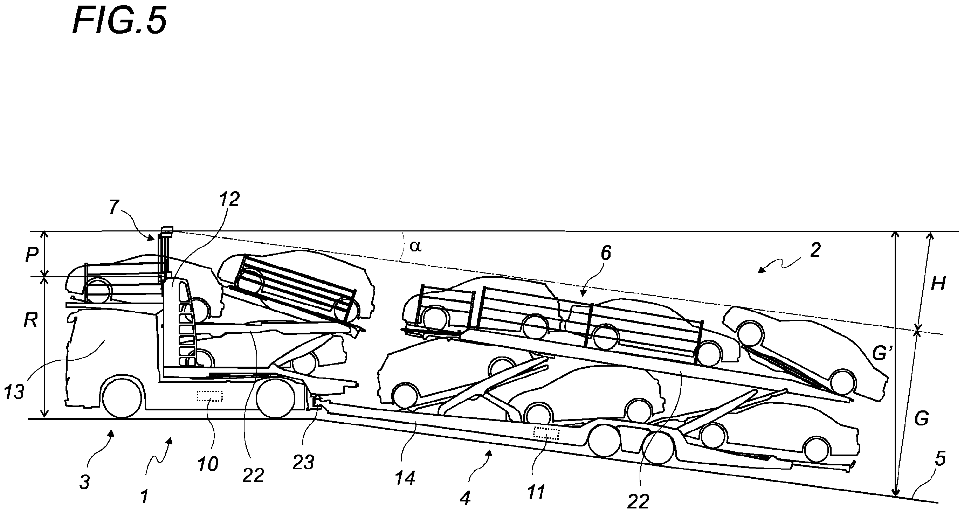

En effet, comme illustré à titre d'exemple sur la figure 5, le sol (5) entre le véhicule de tête (3) et le véhicule attelé (4) peut présenter de multiples pentes et une mesure du gabarit (G) effectuée dans un plan horizontal sans tenir compte de cette inclinaison peut entraîner une erreur importante par rapport au gabarit réel. A titre d'exemple, un angle (α) d'inclinaison relative de ±5° entre le plan du véhicule de tête (3) et celui du véhicule attelé (4) dans l'axe de tangage du convoi routier (2) entraîne une erreur de ±1,22 m, représentée par la hauteur (H) sur la figure 5. Sur cette figure, sans tenir compte de l'angle (α) d'inclinaison, le gabarit mesuré serait représenté par la hauteur (G') au lieu de la hauteur (G).

Afin de tenir compte de l'angle (α) d'inclinaison relative entre le plan du véhicule de tête (3) et celui du véhicule attelé (4), le dispositif optique (8) de l'invention comprend un dispositif de détermination de l'inclinaison relative en tangage entre le véhicule de tête (3) et le véhicule attelé (4).

Ce dispositif de détermination de l'inclinaison relative en tangage peut être sous plusieurs formes.

Selon une première variante de l'invention, le dispositif de détermination de l'inclinaison relative en tangage entre le véhicule de tête (3) et le véhicule attelé (4) comprend un premier inclinomètre (10) destiné à être fixé sur le véhicule de tête (3) et un second inclinomètre (11) destiné à être fixé sur le véhicule attelé (4). Ces inclinomètres (10, 11) sont par exemple prévus sur les châssis des véhicules (3, 4).

Selon cette variante, le système (1) comprend un premier inclinomètre (10) porté par le véhicule de tête (3) qui mesure l'angle d'inclinaison en tangage (α₁) du véhicule de tête (3) et un second inclinomètre (11) porté par le véhicule attelé (4) qui mesure l'angle d'inclinaison en tangage (α₂) du véhicule attelé (4). Par différence des deux valeurs d'inclinaison (α₁-α₂), on détermine l'angle d'inclinaison relative en tangage (α) entre les véhicules (3, 4) du convoi routier (2).

La mesure de l'angle d'inclinaison en tangage des véhicules (3, 4) peut indifféremment être effectuée par rapport à la verticale ou à l'horizontale.

Lorsque tous les véhicules (3, 4) du convoi routier (2) sont équipés d'un inclinomètre (10, 11), il est ainsi possible de connaître de façon précise et fiable l'angle d'inclinaison de tangage (α₁, α₂) de chacun desdits véhicules (3, 4) par rapport au sol (5) de façon individuelle, et d'en déduire en outre de façon précise l'angle (α) d'inclinaison relative entre le plan du véhicule de tête (3) et celui du véhicule attelé (4).

Chaque inclinomètre (10, 11) est de préférence un accéléromètre à trois axes (x,y,z). Ainsi, l'angle de tangage est donné par un inclinomètre par le rapport de la composante X par rapport à la composante Z (arc tangente). Ce type d'inclinomètre permet ainsi de déterminer également l'angle de roulis d'un véhicule (3, 4), par le rapport entre la composante Y par rapport à la composante Z' (Z passée à Z' suite à la rotation autour de Y).

Selon une seconde variante de l'invention, le dispositif de détermination de l'inclinaison relative en tangage entre le véhicule de tête (3) et le véhicule attelé (4) comprend un codeur de mesure d'inclinaison destiné à équiper l'articulation (23) reliant le véhicule de tête (3) au véhicule attelé (4). Par exemple, lorsque le système (1) de mesure selon l'invention est utilisé, ce codeur est prévu pour mesurer directement l'angle d'inclinaison relative entre le véhicule de tête (3) et le véhicule attelé (4) dans un plan vertical parallèle à l'axe longitudinal dans lequel se prolonge le convoi routier (2).

Le mât télescopique (7) comporte un ensemble électromécanique qui comprend un dispositif de déplacement (15) du dispositif optique (8) en translation verticale entre une position basse rétractée et au moins une position haute de mesure.

Comme cela sera vu plus loin, cet ensemble électromécanique peut également comprendre un dispositif de déplacement (16) du dispositif optique (8) en pivotement angulaire dans un plan vertical - également désigné en tant que pivotement en élévation - et un dispositif de déplacement (19) du dispositif optique (8) en pivotement angulaire dans un plan horizontal - également désigné en tant que pivotement en azimut.

Le dispositif de déplacement (15) en translation verticale permet de positionner le dispositif optique (8) à une hauteur adaptée lui permettant de prendre en image au moins la partie supérieure du chargement (6).

Le dispositif de déplacement (15) en translation verticale comprend préférentiellement un vérin (17). L'utilisation d'un vérin (17) est notamment avantageuse en ce qu'elle permet de connaître à tout moment la position du dispositif optique (8) par rapport à la partie fixe du vérin (17) et donc par rapport au mât télescopique (7).

Le dispositif optique (8) de visualisation de la hauteur de chargement (C) est préférentiellement inclinable en élévation. Dans ce cas, l'ensemble électromécanique du mât télescopique (7) comprend un dispositif de déplacement (16) en pivotement angulaire dans un plan vertical qui incline le système optique (9) d'imagerie numérique en élévation.

L'angle d'inclinaison en élévation du système optique (9) d'imagerie numérique peut par exemple être donné par un troisième inclinomètre (20) qui équipe le dispositif optique (8), ou par un codeur de mesure d'inclinaison qui équipe le dispositif de déplacement (16) en pivotement angulaire dans un plan vertical.

Le dispositif de déplacement (16) en pivotement angulaire dans un plan vertical permet d'incliner le dispositif optique (8) de façon motorisée afin d'aligner l'axe central optique du système optique (9) d'imagerie numérique avec le plan du véhicule (3, 4) du convoi routier (2) dont on souhaite mesurer la hauteur de chargement (C). L'axe central optique du système optique (9) d'imagerie numérique peut ainsi être positionné parallèle à l'axe longitudinal dans lequel se prolonge le véhicule (3, 4) du convoi routier (2) dont on souhaite mesurer la hauteur de chargement (C).

Le dispositif optique (8) de visualisation de la hauteur de chargement (C) peut préférentiellement pivoter de façon angulaire dans un plan horizontal. Dans ce cas, l'ensemble électromécanique du mât télescopique (7) comprend un dispositif de déplacement (19) du dispositif optique (8) en pivotement angulaire dans un plan horizontal qui oriente le système optique (9) d'imagerie numérique en azimut.

L'orientation angulaire en azimut du dispositif optique (8) peut par exemple être donnée par un codeur de mesure d'inclinaison ou un potentiomètre linéaire.

Le dispositif de déplacement (19) en pivotement angulaire dans un plan horizontal permet d'orienter le dispositif optique (8) de façon motorisée afin d'effectuer un balayage du chargement dans un plan horizontal pour s'assurer d'en mesurer le point le plus haut, notamment si celui-ci est décalé latéralement.

Ce pivotement angulaire dans un plan horizontal permet également de faire pivoter le dispositif optique (8) à 360° autour de son axe vertical de pivotement (A), pour l'orienter vers le véhicule de tête (3) ou vers le véhicule attelé suiveur (4) afin de mesurer la hauteur de chargement (C) de ces deux véhicules (3, 4).

En étant orienté vers le véhicule de tête (3), le dispositif optique (8) peut également contrôler la hauteur d'un obstacle ou d'un passage tel qu'un pont ou d'un tunnel vers lequel le convoi routier (2) se dirige.

Les dispositifs de déplacement (16 et 19) en pivotement angulaire dans un plan vertical et horizontal sont de préférence constitués par un même système à deux rotations, en premier lieu une rotation autour de la verticale, en second lieu une rotation autour d'un axe perpendiculaire à la verticale. Il peut s'agir d'un dispositif à engrenage de type « Pan / Tilt » habituellement utilisé pour réaliser les mouvements d'une caméra ou d'un appareil photo.

Le mât télescopique (7) est fixé sur un des véhicules (3, 4) du convoi routier (2), à une distance par rapport au sol (5) faisant office de hauteur de référence (R) pour le calcul du gabarit (G).

Le mât télescopique (7) est préférentiellement fixé sur un montant (12) ou sur la cabine (13) du véhicule de tête (3) car il s'agit de parties du véhicule de tête (3) qui ne sont pas mobiles lors du fonctionnement normal du convoi routier (2).

La fixation du mât télescopique (7) sur le véhicule de tête (3) est préférée car dans ce cas la hauteur du mât télescopique (7) par rapport au sol (5) peut être mesurée en usine et renseignée dans une mémoire et/ou une intelligence du système (1), tandis que la variation de hauteur du véhicule de tête (3) par rapport au sol (5) est généralement faible.

L'ensemble électromécanique du système (1) permet avantageusement de motoriser les différents mouvements dans l'espace du dispositif optique (8).

Afin de piloter l'ensemble du système (1), celui-ci comprend également dispositif électronique (18) qui pilote et communique avec le système optique (9) d'imagerie numérique, les inclinomètres (10, 11, 20) ou les codeurs et l'ensemble électromécanique du mât télescopique (7), qui commande les déplacements et le fonctionnement du dispositif optique (8), qui reçoit des données du système optique (9) d'imagerie numérique et des inclinomètres (10, 11, 20), et qui permet de déterminer le gabarit (G) du convoi routier (2) à partir des données reçues et de la distance par rapport au sol (5) du mât télescopique (7) faisant office de hauteur de référence (R).

Ce dispositif électronique (18) de l'invention est préférentiellement logé par un carter (21) qui le protège des agressions extérieures.

Le dispositif électronique (18) est notamment apte à exécuter des algorithmes et/ou des programmes d'ordinateur permettant d'effectuer tous les traitements d'image et les calculs nécessaires à la détermination du gabarit (G) du convoi routier (2). Il permet également de mesurer la hauteur d'un espace libre afin de déterminer si celui-ci présente une hauteur suffisante afin que le convoi routier (2) puisse y circuler.

Le dispositif électronique (18) peut également être prévu pour piloter les vérins de réglage en hauteur des plateaux de chargement (22) des convois porte-voitures afin de respecter les limites réglementaires de gabarit.

On notera que chaque codeur est préférentiellement associé à une électronique de lecture. L'électronique de lecture des codeurs permettant de déterminer l'orientation du système optique (9) d'imagerie numérique est reliée aux dispositifs de déplacement (16, 19) en pivotement angulaire dudit système optique (9) de sorte que le dispositif électronique (18) de l'invention puisse piloter le pivotement angulaire vertical du système optique (9) d'imagerie numérique. Dans ce cas, il est également nécessaire de réaliser un zéro mécanique précis (±0.1°) et stable dans le temps des dispositifs de déplacement (16, 19) en pivotement angulaire assurant le pivotement vertical et/ou horizontal du système optique (9).

Afin que le système (1) selon l'invention soit précis, il est également possible de prévoir un dispositif de mesure de hauteur par rapport au sol (5) destiné à être fixé sur le véhicule (3, 4) sur lequel est monté le mât télescopique (7). Ce dispositif de mesure (non représenté) permet de calculer la distance réelle du mât télescopique (7) par rapport au sol (5) faisant office de hauteur de référence (R) pour le calcul du gabarit (G). Il peut s'agir par exemple d'un capteur laser de distance.

Le dispositif de mesure de hauteur de référence (R) communique avec le dispositif électronique (18) et est piloté par celui-ci.

Selon une première variante de l'invention, le dispositif de mesure de hauteur de référence (R) peut comprendre un capteur optique qui mesure la distance le séparant du sol (5).

Selon une seconde variante de l'invention, le dispositif de mesure de hauteur de référence (R) peut comprendre un capteur de pression qui mesure la pression dans les soufflets de suspension du véhicule de tête (3) et/ou du véhicule attelé (4) suiveur, et le dispositif électronique (18) déduit l'affaissement des suspensions à partir des pressions mesurées.

Selon une autre variante de l'invention, le dispositif de mesure de hauteur de référence (R) peut comprendre à la fois un capteur optique et un capteur de pression tels que décrits précédemment.

On notera que lors du montage du système (1) selon l'invention sur les véhicules (3, 4) du convoi routier (2), la distance par rapport au sol (5) du mât télescopique (7) est connue et qu'il est facile d'en déduire la distance par rapport au sol (5) du système optique (9) d'imagerie numérique.

Cette distance peut varier faiblement au cours du temps, notamment en fonction l'état de gonflage des pneumatiques et de l'affaissement des suspensions dues au poids global du chargement.

Néanmoins, même si on ne connait pas la distance exacte par rapport au sol (5) du système optique (9) d'imagerie numérique, le calcul du gabarit (G) peut être effectué avec une distance au sol approximative. La valeur de gabarit (G) obtenue est alors cependant très proche de la valeur réelle exacte, et dans tous les cas supérieure à celle-ci, ce qui, même en cas d'utilisation d'une distance au sol approximative pour le calcul du gabarit (G), n'est pas susceptible d'entraîner un quelconque risque de sous-estimation dudit gabarit (G).

Afin d'améliorer l'image prise par le système optique (9) et de pouvoir utiliser le système (1) selon l'invention dans n'importes quelles conditions d'éclairage, ce dernier peut comprendre un dispositif d' éclairage prévu pour éclairer le chargement, et un dispositif de correction d'intensité lumineuse qui modifie les images reçues par le système optique (9) d'imagerie numérique.

Ainsi, le système (1) selon l'invention peut par exemple être utilisé de nuit ou lorsque la luminosité est insuffisante, et le dispositif de correction d'intensité lumineuse permet avantageusement d'améliorer les images prises par le système optique d'imagerie numérique pour par exemple en augmenter le contraste et permettre l'utilisation du système même en cas de luminosité très faible ou très importante.

Selon une autre variante de l'invention, le système optique (9) d'imagerie numérique comporte des LED infrarouges, ce qui lui permet de prendre des images dans toutes les conditions de luminosité, même de nuit.

Le système (1) selon l'invention comprend préférentiellement une interface homme-machine (24), qui pilote et communique avec le dispositif électronique (18).

Il s'agit préférentiellement d'une tablette qui affiche notamment les images prises par le système optique (9) d'imagerie numérique.

L'interface homme-machine (24) peut également être prévue pour renseigner la hauteur maximale autorisée relative au code de la route en vigueur et choisir pour quel(s) véhicule(s) (3, 4) du convoi routier (2) on veut contrôler la hauteur de chargement (C).

Elle peut être prévue pour afficher les valeurs renseignées par l'utilisateur, afficher l'angle d'inclinaison relative en tangage (α) entre les véhicules (3, 4) du convoi routier (2), matérialiser par une ligne la hauteur maximale autorisée sur les images prises par le système optique (9), indiquer les positions verticale et angulaires (élévation et azimut) du système optique (9)

Lorsque le dispositif électronique (18) détermine le gabarit (G) du convoi routier (2) de façon automatisée, cette valeur est également affichée sur l'interface homme-machine (24).

L'interface homme-machine (24) permet notamment à l'utilisateur de commander tout le système et de visualiser toutes les informations dont il a besoin concernant le gabarit du convoi routier (2) et la hauteur des obstacles et des passages où il a prévu de circuler.

Lors de l'utilisation d'un système embarqué de mesure (1) de gabarit (G) selon l'invention pour la mesure de gabarit (G) d'un convoi routier (2) comprenant un véhicule de tête (3) et au moins un véhicule attelé (4) suiveur, le procédé de mesure comprend les étapes suivantes :
a) déplacement du dispositif optique (8) en translation verticale vers le haut depuis sa position basse rétractée jusqu'en position haute de mesure ;
b) prise en images par le système optique (9) d'imagerie numérique d'au moins la partie supérieure du véhicule (3, 4) du convoi routier (2) dont on souhaite mesurer la hauteur de chargement ;
c) détermination, par l'utilisateur ou par un logiciel de traitement d'image, de la hauteur de chargement (C) dudit véhicule (3, 4) à partir des images obtenues lors de l'étape b) ;
d) calcul du gabarit (G) du convoi routier (2) à partir de la distance par rapport au sol (5) du système optique (9) d'imagerie numérique et de la hauteur de chargement (C) déterminée à l'étape c).

Dans le cas où le véhicule de tête (3) et l'au moins un véhicule attelé (4) suiveur ne sont pas coplanaires, le procédé comprend les étapes successives supplémentaires suivantes prévues avant l'étape b) :
- détermination de l'inclinaison relative en tangage entre le véhicule de tête (3) et le véhicule attelé (4) ;
- inclinaison en élévation du système optique (9) d'imagerie numérique de sorte que son axe central optique soit parallèle à l'axe longitudinal dans lequel se prolonge le véhicule (3, 4) du convoi routier (2) dont on souhaite mesurer la hauteur de chargement (C).

On notera que dans le cas où le véhicule de tête (3) et l'au moins un véhicule attelé (4) suiveur sont coplanaires, ces étapes sont inutiles. Ainsi, ces étapes du procédé sont facultatives

Lorsque le système (1) comporte un dispositif de mesure de hauteur par rapport au sol (5), le procédé de mesure comprend l'étape supplémentaire suivante prévue avant l'étape d) :
i) mesure de la distance réelle du mât télescopique (7) par rapport au sol (5) pour déterminer la distance par rapport au sol (5) du système optique (9) d'imagerie numérique.

Lorsque le dispositif de déplacement (19) du dispositif optique (8) en pivotement angulaire dans un plan horizontal est adapté pour orienter le dispositif optique (8) à 360° autour de son axe vertical de pivotement (A), le système (1) permet d'effectuer une mesure de hauteur de chargement (C) pour un des véhicules (3, 4) du convoi routier (2), puis pour le suivant. Le procédé de mesure comprend alors les étapes supplémentaires suivantes venant en remplacement de l'étape d) :
α) pivotement du dispositif optique (8) à 360° autour de son axe vertical de pivotement ;
β) prise en images par le système optique (9) d'imagerie numérique d'au moins la partie supérieure du véhicule (4, 3) du convoi routier (2) distinct du véhicule (3, 4) dont on a déterminé la hauteur de chargement (C) au cours de l'étape c) ;
γ) détermination, par l'utilisateur ou par un logiciel de traitement d'image, de la hauteur de chargement (C) dudit véhicule (4, 3) à partir des images obtenues lors de l'étape β) ;
δ) calcul du gabarit (G) du convoi routier (2) à partir de la distance par rapport au sol (5) du système optique (9) d'imagerie numérique et des hauteurs de chargement (C) déterminées lors des étapes c) et γ).

Selon un mode de réalisation avancé de l'invention, le système embarqué de mesure (1) de gabarit (G) selon l'invention exploite des techniques de traitement d'image numérique pour réaliser une mesure de hauteur entièrement automatique.

Selon une variante du procédé de l'invention, celui-ci comprend l'étape supplémentaire suivante prévue après l'étape d) ou δ) :
e) affichage en réalité augmentée du gabarit (G) sur au moins une des images obtenues par le système optique (9) d'imagerie numérique, cet affichage étant sous la forme d'une représentation virtuelle destinée à l'opérateur.

A partir des images fournies par le système optique (9), le dispositif électronique (18) utilise un programme d'ordinateur de traitement d'image basé sur des algorithmes prévus pour effectuer les opérations successives suivantes :
- classement de manière automatique des régions de l'image qui contiennent une ou plusieurs des charges provenant du chargement (6) du convoi (2) ;
- identification parmi les régions ainsi classées celle qui appartient à la charge la plus haute du convoi (2) ;
- extraction des contours de ladite charge la plus haute de cette région à partir de la région qui appartient à la charge la plus haute du convoi (2) ; et
- détermination des coordonnées en pixels dans l'image du pixel ou du centroïde du groupe de pixels qui désigne le point le plus haut du chargement (6).

Les coordonnées en pixels dans l'image du pixel ou du centroïde du groupe de pixels qui désigne le point le plus haut du chargement, déterminées au sein du dispositif électronique (18) est par exemple fournir à l'ensemble électromécanique du mât télescopique (7). Avec cette dernière information, par asservissement visuel 2D, le dispositif électronique (18) commande ensuite l'ensemble électromécanique du mât télescopique (7) afin qu'il positionne le centre optique du système optique (9) d'imagerie numérique de coordonnées connues dans l'image sur la coordonnée du pixels ou centroïde représentant l'élément le plus haut du convoi (2).

Les coordonnées connues dans l'image sont déterminées par calibration du système optique (9) : le centre optique du système optique (9) d'imagerie numérique n'est pas forcément aligné sur le pixel central du système optique (9), il peut être décalé d'une vingtaine de pixels par exemple, en x et en y.

Ainsi, de sorte d'aligner le point haut du chargement sur le centre optique du système optique (9) d'imagerie numérique, on fait monter ou descendre le système optique (9) jusqu'à ce que le point le plus haut du chargement se retrouve au centre de l'image qu'il reçoit.

Parmi les opérations décrites précédemment, le principe du classement automatique des régions de l'image qui contiennent une ou plusieurs des charges provenant du chargement (6) repose sur un traitement d'image qui, à partir d'une image d'entrée, délimiter des zones obéissant à au moins un même critère choisi : couleur, texture, formes, motifs, intensité...

L'ensemble de ces critères est choisi pour chaque type de charge afin de permettre de classer sans erreur une région de l'image appartenant au type de charge que l'on souhaite délimiter.

L'algorithme de classification utilisé peut exploiter une base de données d'images afin de déterminer parmi un jeu de critères (couleur, texture, formes, motifs, intensité...) prédéfini ou appris automatiquement, celui ou ceux qui permettent) d'identifier le type de charge recherché parmi une grande majorité d'images de la base de données des différents types de charge.

L'algorithme de classification peut également exploiter des critères, par exemple de type masques, définis sur la base d'observations pour la détection des charges que l'on souhaite délimiter. Ainsi, dans le cas d'un convoi routier (2) de type porte-voitures, l'algorithme de classification peut par exemple baser sa détection sur la courbe moyenne de la toiture des véhicules chargés.

Le système embarqué de mesure (1) de gabarit (G) selon l'invention est capable de positionner automatiquement le centre optique du système optique (9) d'imagerie numérique en exploitant ses mobilités (translation d'axe vertical et rotation d'axe vertical) fournies par l'ensemble électromécanique du mât télescopique (7) et en exploitant des prises de vues sur une coordonnée exprimée dans l'image.

Pour ce faire, l'erreur ou l'écart entre la position courante du centre optique du système optique (9) et la coordonnée à atteindre est calculée, par exemple en pixels. Une loi de commande des dispositifs de déplacement (15, 16) de l'ensemble électromécanique du mât télescopique (7) est alors élaborée à partir de cette erreur de position et du modèle cinématique du système. La loi de commande génère ainsi les déplacements du système optique (9) qui permettent de minimiser ou d'annuler l'erreur de position précédemment définie.

A la fin du positionnement automatique, la hauteur est alors calculée par le dispositif électronique (18) et peut par exemple être affichée pour l'utilisateur.

Selon un mode de réalisation simplifié de l'invention, la détermination de la hauteur de chargement (C) d'un véhicule (3, 4) à partir des images obtenues par le système optique (9) n'est pas effectué par un logiciel de traitement d'image, mais par l'utilisateur. Dans ce cas, les images obtenues par le système optique (9) sont affichées sur un écran, par exemple sur l'interface homme-machine (24) et l'utilisateur peut visionner les différentes images prises par le système optique (9) pour déterminer l'image dans laquelle le point le plus haut du chargement transporté par le convoi routier (2) apparaît au centre de son écran. Un repère visuel, par exemple une barre horizontale, peut par exemple être affichée dans ce but au centre de l'écran, au niveau de la position du centre optique du système optique (9).

Selon ce mode de réalisation, plusieurs modes d'utilisation du système (1) de mesure selon l'invention peuvent être envisagés. En voici trois donnés à titre d'exemple qui permettent de s'assurer que le gabarit (G) d'un convoi routier (2) respecte la hauteur maximale autorisée relative au code de la route en vigueur.

### Mode manuel 1 :

1) l'utilisateur renseigne la hauteur maximale autorisée relative au code de la route en vigueur ;
2) l'utilisateur choisit pour quel(s) véhicule(s) il veut contrôler la hauteur de chargement (C) : le véhicule de tête (3) et/ou le véhicule attelé (4) ;
3) le dispositif optique (8) est déplacé verticalement par l'ensemble électromécanique pour aligner le centre optique du système optique (9) d'imagerie numérique avec la cote de hauteur maximale autorisée ;
4) le système optique (9) est orienté vers un véhicule dont on souhaite contrôler la hauteur de chargement (C), son inclinaison en élévation peut être corrigée de manière adaptée si les deux véhicules ne sont pas coplanaires ;
5) au moins une image est prise par le système optique (9) et envoyée sur la tablette de l'utilisateur, avec un traitement d'image léger dessinant une droite correspondant à la hauteur maximale autorisée ;
6) l'utilisateur vérifie le point haut du véhicule pris en image, et s'assure que celui-ci est situé sous la droite correspondant à la hauteur maximale autorisée ;
7) si l'utilisateur veut contrôler la hauteur de chargement (C) des deux véhicule, le système optique (9) est orienté vers l'autre véhicule dont on souhaite contrôler la hauteur de chargement (C), son inclinaison en élévation peut être corrigée de manière adaptée si les deux véhicules ne sont pas coplanaires ;
8) au moins une image est prise par le système optique (9) et envoyée sur la tablette de l'utilisateur, avec un traitement d'image léger dessinant une droite correspondant à la hauteur maximale autorisée ;
9) l'utilisateur vérifie le point haut du second véhicule pris en image, et s'assure que celui-ci est situé sous la droite correspondant à la hauteur maximale autorisée.

### Mode manuel 2 :

1) l'utilisateur renseigne la hauteur maximale autorisée relative au code de la route en vigueur ;
2) l'utilisateur choisit pour quel(s) véhicule(s) il veut contrôler la hauteur de chargement (C) : le véhicule de tête (3) et/ou le véhicule attelé (4) ;
3) le système optique (9) est orienté vers un véhicule dont on souhaite contrôler la hauteur de chargement (C), son inclinaison en élévation peut être corrigée de manière adaptée si les deux véhicules ne sont pas coplanaires ;
4) le système optique (9) est déplacé verticalement par l'ensemble électromécanique, par exemple depuis le bas vers le haut, parallèlement au plan de roulement du véhicule dont on souhaite contrôler la hauteur de chargement (C) et prend une quantité d'images ;
5) l'ensemble des images est envoyé sur la tablette de l'utilisateur, avec un traitement d'image léger dessinant une droite correspondant à la hauteur maximale autorisée ;
6) l'utilisateur visualise les différentes images, vérifie le point haut du véhicule pris en image, et s'assure que celui-ci est situé sous la droite correspondant à la hauteur maximale autorisée ;
7) si l'utilisateur veut contrôler la hauteur de chargement (C) des deux véhicule, le système optique (9) est orienté vers l'autre véhicule dont on souhaite contrôler la hauteur de chargement (C), son inclinaison en élévation peut être corrigée de manière adaptée si les deux véhicules ne sont pas coplanaires ;
8) le système optique (9) est déplacé verticalement par l'ensemble électromécanique, par exemple depuis le haut vers le bas, parallèlement au plan de roulement du second véhicule dont on souhaite contrôler la hauteur de chargement (C) et prend une quantité d'images ;
9) l'ensemble des images est envoyé sur la tablette de l'utilisateur, avec un traitement d'image léger dessinant une droite correspondant à la hauteur maximale autorisée ;
10) l'utilisateur vérifie le point haut du second véhicule pris en image, et s'assure que celui-ci est situé sous la droite correspondant à la hauteur maximale autorisée.

### Mode manuel "Click & go" :

1) le système optique (9) est déplacé verticalement par l'ensemble électromécanique, par exemple depuis le bas vers le haut jusqu'à sa position la plus haute ;
2) l'utilisateur choisit pour quel(s) véhicule(s) il veut contrôler la hauteur de chargement (C) : le véhicule de tête (3) et/ou le véhicule attelé (4) ;
3) le système optique (9) est orienté vers un véhicule dont on souhaite contrôler la hauteur de chargement (C), son inclinaison en élévation peut être corrigée de manière adaptée si les deux véhicules ne sont pas coplanaires ;
4) le système optique (9) prend une quantité d'images et au moins une image est envoyée sur la tablette de l'utilisateur ;
5) l'utilisateur sélectionne par clic sur la tablette le pixel le plus haut appartenant au véhicule dont on souhaite contrôler la hauteur de chargement (C).;
6) le système optique (9) est déplacé verticalement par l'ensemble électromécanique de sorte d'aligner son centre optique avec le point haut identifié pour mieux voir la situation ;
7) au moins une image est prise par le système optique (9) et envoyée sur la tablette de l'utilisateur ;
8) si l'utilisateur veut contrôler la hauteur de chargement (C) des deux véhicules (3,4), on refait les étapes 3) à 7) pour le second véhicule.

Il est évident que la présente description ne se limite pas aux exemples explicitement décrits, mais comprend également d'autres modes de réalisation et/ou de mise en oeuvre. Ainsi, une caractéristique technique décrite peut être remplacée par une caractéristique technique équivalente sans sortir du cadre de la présente invention tel que défini par les revendications annexées et une étape décrite de mise en oeuvre du procédé peut être remplacée par une étape équivalente sans sortir du cadre de l'invention tel que défini par les revendications.

## Revendications

1. Procédé de mesure de gabarit (G) d'un convoi routier (2) transportant un chargement (6) et comprenant un véhicule de tête (3) et au moins un véhicule attelé (4) suiveur, ledit procédé étant **caractérisé en ce qu'**il utilise un système embarqué de mesure (1) de gabarit (G) comprenant un mât télescopique (7) vertical équipé au niveau de son extrémité supérieure d'un dispositif optique (8) comprenant un système optique (9) d'imagerie numérique, et **en ce qu'**il comprend les étapes suivantes :
a) déplacement du dispositif optique (8) en translation verticale vers le haut depuis sa position basse rétractée jusqu'en position haute de mesure ;
b) prise en images par le système optique (9) d'imagerie numérique d'au moins la partie supérieure du véhicule (3, 4) du convoi routier (2) dont on souhaite mesurer la hauteur de chargement ;
c) détermination, par l'utilisateur ou par un logiciel de traitement d'image, de la hauteur de chargement (C) dudit véhicule (3, 4) à partir des images obtenues lors de l'étape b) ;
d) calcul du gabarit (G) du convoi routier (2) à partir de la distance par rapport au sol (5) du système optique (9) d'imagerie numérique et de la hauteur de chargement (C) déterminée à l'étape c).

2. Procédé de mesure selon la revendication précédente, **caractérisé en ce qu'**il comprend les étapes successives supplémentaires suivantes prévues avant l'étape b) :
- détermination de l'inclinaison relative en tangage entre le véhicule de tête (3) et le véhicule attelé (4) ;
- inclinaison en élévation du système optique (9) d'imagerie numérique de sorte que son axe central optique soit parallèle à l'axe longitudinal dans lequel se prolonge le véhicule (3, 4) du convoi routier (2) dont on souhaite mesurer la hauteur de chargement (C).

3. Procédé de mesure selon l'une quelconque des revendications précédentes, **caractérisé en ce qu'**il comprend l'étape supplémentaire suivante prévue avant l'étape d) :
i) mesure de la distance réelle du mât télescopique (7) par rapport au sol (5) pour déterminer la distance par rapport au sol (5) du système optique (9) d'imagerie numérique.

4. Procédé de mesure selon l'une quelconque des revendications précédentes, **caractérisé en ce qu'**il comprend les étapes supplémentaires suivantes venant en remplacement de l'étape d) :
α) pivotement du dispositif optique (8) à 360° autour de son axe vertical de pivotement ;
β) prise en images par le système optique (9) d'imagerie numérique d'au moins la partie supérieure du véhicule (4, 3) du convoi routier (2) distinct du véhicule (3, 4) dont on a déterminé la hauteur de chargement (C) au cours de l'étape c) ;
γ) détermination, par l'utilisateur ou par un logiciel de traitement d'image, de la hauteur de chargement (C) dudit véhicule (4, 3) à partir des images obtenues lors de l'étape β) ;
δ) calcul du gabarit (G) du convoi routier (2) à partir de la distance par rapport au sol (5) du système optique (9) d'imagerie numérique et des hauteurs de chargement (C) déterminées lors des étapes c) et γ).

5. Procédé de mesure selon l'une quelconque des revendications précédentes, **caractérisé en ce qu'**il comprend l'étape supplémentaire suivante prévue après l'étape d) ou δ) :
e) affichage en réalité augmentée du gabarit (G) sur au moins une des images obtenues par le système optique (9) d'imagerie numérique, cet affichage étant sous la forme d'une représentation virtuelle destinée à l'opérateur.

6. Procédé de mesure selon l'une quelconque des revendications précédentes, **caractérisé en ce qu'**au cours des étapes c) et/ou γ) des algorithmes de traitement d'image effectuent les opérations successives suivantes :
- classement de manière automatique des régions de l'image qui contiennent une ou plusieurs des charges provenant du chargement (6) du convoi (2) ;
- identification parmi les régions ainsi classées celle qui appartient à la charge la plus haute du convoi (2) ;
- extraction des contours de ladite charge la plus haute de cette région à partir de la région qui appartient à la charge la plus haute du convoi (2) ; et
- détermination des coordonnées en pixels dans l'image du pixel ou du centroïde du groupe de pixels qui désigne le point le plus haut du chargement (6).

7. Procédé de mesure selon la revendication précédente, **caractérisé en ce que** les coordonnées en pixels dans l'image du pixel ou du centroïde du groupe de pixels qui désigne le point le plus haut du chargement sont fournies par un dispositif électronique (18) à un ensemble électromécanique du mât télescopique (7) comprenant un dispositif de déplacement (15) réalisant le déplacement du dispositif optique (8) en translation verticale afin que ledit ensemble électromécanique positionne le centre optique du système optique (9) d'imagerie numérique sur la coordonnée du pixel ou centroïde représentant l'élément le plus haut du convoi (2).

8. Procédé de mesure selon la revendication 6 ou 7, **caractérisé en ce que** le classement automatique des régions de l'image qui contiennent une ou plusieurs des charges provenant du chargement (6) repose sur un traitement d'image qui, à partir d'une image d'entrée, délimite des zones obéissant à au moins un même critère choisi.

9. Procédé de mesure selon la revendication précédente, **caractérisé en ce que** les algorithmes de traitement d'image exploitent une base de données d'images afin de déterminer parmi un jeu de critères, celui ou ceux qui permet(tent) d'identifier le type de charge recherché.

10. Procédé de mesure selon la revendication 7, **caractérisé en ce qu'**il utilise un algorithme qui calcule l'erreur ou l'écart entre la position courante du centre optique du système optique (9) et la coordonnée à atteindre et qui élabore une loi de commande du dispositif de déplacement (15) en translation verticale de l'ensemble électromécanique à partir de cette erreur de position et du modèle cinématique du système, loi de commande générant les déplacements du système optique (9) pour minimiser ou annuler l'erreur de position précédemment définie.

11. Système embarqué de mesure (1) prévu pour mettre en oeuvre le procédé selon l'une quelconque des revendications 1 à 10, ledit système (1) comprenant un mât télescopique (7) vertical équipé au niveau de son extrémité supérieure d'un dispositif optique (8) comprenant un système optique (9) d'imagerie numérique, ledit système (1) étant **caractérisé en ce que** :
- le mât télescopique (7) est adapté pour être fixé sur un des véhicules (3, 4) du convoi routier (2), à une distance par rapport au sol (5) faisant office de hauteur de référence (R) pour le calcul du gabarit (G) ;
- le mât télescopique (7) comporte un ensemble électromécanique qui comprend un dispositif de déplacement (15) du dispositif optique (8) en translation verticale entre une position basse rétractée et au moins une position haute de mesure ;
- le système embarqué de mesure (1) comprend un dispositif électronique (18) qui pilote et communique avec le système optique (9) d'imagerie numérique et l'ensemble électromécanique du mât télescopique (7), qui commande les déplacements et le fonctionnement du dispositif optique (8).

12. Système embarqué de mesure (1) selon la revendication précédente, **caractérisé en ce que** le système (1) comprend en outre un dispositif de détermination de l'inclinaison relative en tangage entre le véhicule de tête (3) et le véhicule attelé (4), et **en ce que** ledit dispositif de détermination de l'inclinaison relative communique avec le dispositif électronique (18).

13. Système embarqué de mesure (1) selon la revendication précédente, **caractérisé en ce que** le dispositif de détermination de l'inclinaison relative en tangage entre le véhicule de tête (3) et le véhicule attelé (4) comprend :
- un premier inclinomètre (10) destiné à être fixé sur le véhicule de tête (3) et un second inclinomètre (11) destiné à être fixé sur le véhicule attelé (4) ; ou
- un codeur de mesure d'inclinaison destiné à équiper l'articulation reliant le véhicule de tête (3) au véhicule attelé (4).

14. Système embarqué de mesure (1) selon l'une quelconque des revendications 11 à 13, **caractérisé en ce que** :
- l'ensemble électromécanique du mât télescopique (7) comprend un dispositif de déplacement (16) en pivotement angulaire dans un plan vertical qui incline le système optique (9) d'imagerie numérique en élévation, ledit dispositif de déplacement (16) communiquant avec le dispositif électronique (18) et étant piloté par celui-ci ;
- le système optique (9) d'imagerie numérique comprend soit un troisième inclinomètre (20), soit un codeur de mesure d'inclinaison, qui détermine l'angle d'inclinaison en élévation du système optique (9) d'imagerie numérique, ce troisième inclinomètre (20) ou ce codeur de mesure d'inclinaison communiquant avec le dispositif électronique (18).

15. Système embarqué de mesure (1) selon l'une quelconque des revendications 11 à 14, **caractérisé en ce que** l'ensemble électromécanique système (1) comprend un dispositif de déplacement (19) en pivotement angulaire dans un plan horizontal qui fait pivoter le système optique (9) d'imagerie numérique en azimut, ledit dispositif de déplacement (19) communiquant avec le dispositif électronique (18) et étant piloté par celui-ci.

16. Système embarqué de mesure (1) selon la revendication précédente, **caractérisé en ce que** le dispositif de déplacement (19) du dispositif optique (8) en pivotement angulaire dans un plan horizontal est adapté pour orienter le système optique (9) d'imagerie numérique à 360° autour de son axe vertical de pivotement (A).

17. Système embarqué de mesure (1) selon l'une quelconque des revendications 11 à 16, **caractérisé en ce qu'**il comprend en outre au moins un dispositif de mesure de hauteur par rapport au sol (5) destiné à être monté sur le véhicule de tête (3) et/ou le véhicule attelé (4) suiveur et qui calcule la distance réelle du mât télescopique (7) par rapport au sol (5) faisant office de hauteur de référence (R) pour le calcul du gabarit (G), ce dispositif de mesure communiquant avec le dispositif électronique (18) et étant piloté par celui-ci.

18. Système embarqué de mesure (1) selon la revendication précédente, **caractérisé en ce que** le dispositif de mesure de hauteur par rapport au sol (5) comprend un capteur optique qui mesure la distance le séparant du sol (5) ou un capteur de pression qui mesure la pression dans les soufflets de suspension du véhicule de tête (3) et/ou du véhicule attelé (4) suiveur, le dispositif électronique (18) déduisant l'affaissement des suspensions à partir des pressions mesurées.

19. Système embarqué de mesure (1) selon l'une quelconque des revendications 11 à 18, **caractérisé en ce qu'**il comprend une interface homme-machine (24) qui pilote et communique avec le dispositif électronique (18).

20. Système embarqué de mesure (1) selon l'une quelconque des revendications 11 à 19, **caractérisé en ce que** le système optique (9) d'imagerie numérique comporte des LED infrarouges.

21. Programme d'ordinateur comprenant des instructions de code de programme pour l'exécution des étapes du procédé selon l'une quelconque des revendications 1 à 10 lorsque ledit programme d'ordinateur est exécuté sur un ordinateur d'un système embarqué de mesure (1) selon l'une quelconque des revendications 11 à 20, et **caractérisé en ce que** l'étape c) est réalisée par un logiciel de traitement d'image.

## Patentansprüche

1. Messverfahren des Profils (G) eines Lastzugs (2), der eine Ladung (6) transportiert und aus einem führenden Fahrzeug (3) und mindestens einem folgenden angekuppelten Anhänger (4) bestehen, dieses Verfahren ist **dadurch gekennzeichnet, dass** es ein eingebettetes Messsystem (1) des Profils (G) benutzt, das einen vertikalen Teleskopmast (7) umfasst, der in Höhe seines oberen Endes mit einer optischen Vorrichtung (8) ausgerüstet ist, die ein optisches Bildverarbeitungssystem (9) enthält, und dadurch, dass es die folgenden Schritte umfasst:
a) Verschiebung der optischen Vorrichtung (8) vertikal nach oben, aus der unteren, eingezogenen Position in die obere Messposition;
b) Aufnahme durch das optische Bildverarbeitungssystem (9) mindestens des oberen Teils des Fahrzeugs (3, 4) des Lastzugs. (2), bei dem die Ladungshöhe gemessen werden soll;
c) Bestimmung durch den Benutzer oder eine Bildverarbeitungssoftware, der Höhe der Ladung (C) dieses Fahrzeugs (3, 4) ausgehend von den in Schritt b) erhaltenen Bilder;
d) Berechnung des Profils (G) des Lastzugs (2) ausgehend von Abstand zum Boden (5) des optischen Bildverarbeitungssystems (9) und der Höhe der Ladung (C), bestimmt in Schritt c).

2. Messverfahren nach dem vorangehenden Anspruch, **dadurch gekennzeichnet, dass** es zusätzlich die nachstehenden zusätzlichen aufeinanderfolgenden Schritte umfasst, die vor Schritt b) vorgesehen sind:
- Bestimmung der relativen Nickneigung zwischen dem führenden Fahrzeug (3) und dem angekuppelten Fahrzeug (4);
- Neigung bei Elevation des optischen Bildverarbeitungssystems (9), so dass seine zentrale optische Achse parallel zur Längsachse ist, in der sich das Fahrzeug (3, 4) des Lastzugs (2) verlängert, dessen Ladungshöhe (C) gemessen werden soll.

3. Messverfahren nach irgendeinem der vorangehenden Ansprüche, **dadurch gekennzeichnet, dass** es den folgenden zusätzlichen Schritt, vorgesehen vor Schritt d) enthält:
i) Messung des tatsächlichen Abstandes des Teleskopmastes (7) zum Boden (5) zur Bestimmung des Abstandes des optischen Bildverarbeitungssystems (9) zum Boden (5).

4. Messverfahren nach irgendeinem der vorangehenden Ansprüche, **dadurch gekennzeichnet, dass** es die folgenden zusätzlichen Schritte enthält, die Schritt d) ersetzen:
α) Schwenken der optischen Vorrichtung (8) um 360° um ihre vertikale Schwenkachse herum;
β) Aufnahme durch das optische Bildverarbeitungssystem (9) mindestens des oberen Teils des Fahrzeugs (4, 3) des Lastzugs (2) bei dem es sich nicht um das Fahrzeug (3, 4) handelt, dessen Ladungshöhe (C) im Schritt c) bestimmt wurde;
γ) Bestimmung durch den Benutzer oder eine Bildverarbeitungssoftware, der Höhe der Ladung (C) dieses Fahrzeugs (4, 3) ausgehend von den in Schritt β) erhaltenen Bilder;
δ) Berechnung des Profils (G) des Lastzugs (2) ausgehend vom Abstand zum Boden (5) des optischen Bildverarbeitungssystems (9) und der Ladungshöhen (C), die in den Schritten c) et γ) bestimmt wurden.

5. Messverfahren nach irgendeinem der vorangehenden Ansprüche, **dadurch gekennzeichnet, dass** es den folgenden zusätzlichen Schritt, vorgesehen vor Schritt d) oder o) enthält:
e) AR-Anzeige des Profils (G) auf mindestens einem der vom optischen Bildverarbeitungssystem (9) erhaltenen Bilder, diese Anzeige hat die Form einer für den Bediener bestimmten virtuellen Darstellung.

6. Messverfahren nach irgendeinem der vorangehenden Ansprüche, **dadurch gekennzeichnet, dass** während der Schritte c) und/oder γ) Bildverarbeitungsalgorithmen die nachstehenden, aufeinanderfolgenden Operationen ausführen:
- automatische Einstufung der Bereiche des Bildes, die eine oder mehrere Lasten enthalten, die aus der Ladung (6) des Lastzugs (2) stammen:
- aus den so eingestuften Bereichen diejenigen identifizieren, die der höchsten Last des Lastzugs (2) entsprechen;
- Extraktion der Konturen der höchsten Last dieses Bereichs, ausgehend von dem Bereich, der der höchsten Last des Lastzugs (2) entspricht; und
- Bestimmung der Koordinaten in Pixel im Pixelbild oder des Zentroids der Pixelgruppe, der den höchsten Punkt der Ladung (6) bezeichnet.

7. Messverfahren nach dem vorangehenden Anspruch, **dadurch gekennzeichnet, dass** die Koordinaten in Pixel im Pixelbild oder des Zentroids der Pixelgruppe, der den höchsten Punkt der Ladung bezeichnet, von einer elektronischen Vorrichtung (18) an eine elektromechanische Einheit des Teleskopmastes (7) geliefert werden, der eine Verschiebevorrichtung (15) umfasst, die eine Verschiebung der optischen Vorrichtung (8) in vertikaler Richtung erlaubt, so dass diese elektromechanische Einheit das optische Zentrum des optischen Bildverarbeitungssystems (9) auf der Pixelkoordinate oder dem Zentroid, die das höchste Element des Lastzugs (2) bilden, positioniert.

8. Messverfahren nach Anspruch 6 oder 7, **dadurch gekennzeichnet, dass** die automatische Einstufung der Bildbereiche, die eine oder mehrere Lasten enthalten und aus der Ladung (6) stammen, auf einer Bildverarbeitung beruht, die ausgehend von einem Eingangsbild Zonen begrenzt, die mindestens einem gleichen gewählten Kriterium entsprechen.

9. Messverfahren nach dem vorangehenden Anspruch, **dadurch gekennzeichnet, dass** die Bildverarbeitungsalgorithmen eine Bilddatenbank nutzen, um aus einem Satz an Kriterien das oder die auszuwählen, mit dem(denen) der gesuchte Lasttyp identifiziert werden kann.

10. Messverfahren nach Anspruch 7, **dadurch gekennzeichnet, dass** ein Algorithmus genutzt wird, der den Fehler oder die Abweichung zwischen der aktuellen Position des optischen Zentrums des optischen Systems (9) und der zu erreichenden Koordinate berechnet und der ein Steuerungsgesetz der Verschiebevorrichtung (15) in der Vertikalen dieser elektromechanischen Einheit ausgehend von diesem Positionsfehler und dem kinematischen Modell erarbeitet, ein Steuerungsgesetz, dass die Verschiebungen des optischen Systems (9) veranlasst um den vorher definierten Positionsfehler zu minimieren oder zu annullieren.

11. Eingebettetes Messsystem (1), vorgesehen zur Umsetzung des Verfahrens nach irgendeinem der vorangehenden Ansprüche 1 bis 10, dabei umfasst dieses System (1) einen vertikalen Teleskopmast (7), ausgerüstet in Höhe seines oberen Endes mit einer optischen Vorrichtung (8), die ein optisches Bildverarbeitungssystem (9) umfasst, dieses Systems (1) ist **dadurch gekennzeichnet, dass**:
- der Teleskopmast (7) so ausgelegt ist, dass er an einem der Fahrzeuge (3, 4) des Lastzugs (2) befestigt werden kann, in einem Abstand zum Boden (5), der als Referenzhöhe (R) zur Berechnung des Profils (G) gilt;
- der Teleskopmast (7) eine elektromechanische Einheit enthält, die eine Verschiebevorrichtung (15) für die optische Vorrichtung (8) in der Vertikalen zwischen einer unteren, eingezogenen Position und mindestens einer oberen Messposition umfasst;
- das eingebettete Messsystem (1) eine elektronische Vorrichtung (18) umfasst, die das optische Bildverarbeitungssystem (9) steuert und mit ihm kommuniziert und die die elektromechanische Einheit des Teleskopmastes (7), der die Verschiebungen und den Betrieb der optischen Vorrichtung (8) steuert.

12. Eingebettetes Messsystem (1) nach dem vorangehenden Anspruch, **dadurch gekennzeichnet, dass** das System (1) außerdem eine Vorrichtung zur Bestimmung der relativen Nickneigung zwischen dem führenden Fahrzeug (3) und dem angekuppelten Fahrzeug (4) enthält, und dass diese Vorrichtung zur Bestimmung der relativen Neigung mit der elektronischen Vorrichtung (18) kommuniziert.

13. Eingebettetes Messsystem (1) nach dem vorangehenden Anspruch, **dadurch gekennzeichnet, dass** das System außerdem eine Vorrichtung zur Bestimmung der relativen Nickneigung zwischen dem führenden Fahrzeug (3) und dem angekuppelten Fahrzeug (4) umfasst:
- einen ersten Neigungsmesser (10) vorgesehen zur Befestigung am führenden Fahrzeug (3) und einen zweiten Neigungsmesser (11), vorgesehen zur Befestigung am angekuppelten Fahrzeug (4); oder
- einen Neigungsmesswertgeber, vorgesehen zur Ausrüstung des Gelenks, das das führende Fahrzeug (3) mit dem angekuppelten Fahrzeug (4) verbindet.

14. Eingebettetes Messsystem (1) nach irgendeinem der vorangehenden Ansprüche 11 bis 13, **dadurch gekennzeichnet, dass**:
- die elektromechanische Einheit des Teleskopmastes (7) eine Vorrichtung (16) zum Verschwenken um einen Winkel in vertikaler Ebene, die das optische Bildverarbeitungssystem (9) in der Elevation neigt, enthält, diese Verschiebevorrichtung (16) kommuniziert dabei mit der elektronischen Vorrichtung (18) und wird von dieser gesteuert;
- das optische Bildverarbeitungssystem (9) entweder einen dritten Neigungsmesser (20), oder einen Neigungsmesswertgeber, der den Neigungswinkel in der Elevation des optischen Bildverarbeitungssystems (9) bestimmt, umfasst, dieser dritte Neigungsmesser (20) oder dieser Neigungsmesswertgeber kommunizieren dabei mit der elektronischen Vorrichtung (18).

15. Eingebettetes Messsystem (1) nach irgendeinem der Ansprüche 11 bis 14, **dadurch gekennzeichnet, dass** die elektromechanische Einheit des Systems (1) eine Vorrichtung (19) zum Verschwenken um einen Winkel in horizontaler Ebene herum umfasst, die das optische Bildverarbeitungssystem (9) im Azimut schwenkt, diese Verschwenkvorrichtung (19) kommuniziert mit der elektronischen Vorrichtung (18) und wird von dieser gesteuert.

16. Eingebettetes Messsystem (1) nach dem vorangehenden Anspruch, **dadurch gekennzeichnet, dass** die Verschwenkvorrichtung (19) der optischen Vorrichtung (8) um einen Winkel in horizontaler Ebene herum in der Lage ist, das optische Bildverarbeitungssystem (9) über 360° um seine vertikale Schwenkachse (A) auszurichten.

17. Eingebettetes Messsystem (1) nach irgendeinem der vorangehenden Ansprüche 11 bis 16, **dadurch gekennzeichnet, dass** es außerdem mindestens eine Messvorrichtung der Höhe zum Boden (5) enthält, vorgesehen zur Montage am führenden Fahrzeug (3) und/ oder dem angekuppelten, folgenden Fahrzeug (4) und die den tatsächlichen Abstand des Teleskopmastes (7) zum Boden (5) berechnet, die als Referenzhöhe (R) zur Berechnung des Profils (G) gilt, diese Messvorrichtung kommuniziert dabei mit der elektronischen Vorrichtung (18) und wird von dieser gesteuert.

18. Eingebettetes Messsystem (1) nach dem vorangehenden Anspruch, **dadurch gekennzeichnet, dass** die Messvorrichtung der Höhe zum Boden (5) einen optischen Fühler enthält, der den Abstand misst, der ihn vom Boden (5) trennt oder einen Druckfühler, der den Druck in den Luftfederbälgen des führenden Fahrzeugs (3) und/ oder des angekuppelten, folgenden Fahrzeugs (4) misst, die elektronische Vorrichtung (18) schließt auf die Absenkung der Luftfederbälge auf der Grundlage der gemessenen Drücke.

19. Eingebettetes Messsystem (1) nach irgendeinem der vorangehenden Ansprüche 11 bis 18, **dadurch gekennzeichnet, dass** es eine Schnittstelle Mensch - Maschine (24) enthält, die die elektronische Vorrichtung (18) steuert und mit ihr kommuniziert.

20. Eingebettetes Messsystem (1) nach irgendeinem der vorangehenden Ansprüche 11 bis 19, **dadurch gekennzeichnet, dass** das optische Bildverarbeitungssystem (9) Infrarot - LED enthält.

21. Computerprogramm mit Programm- Code- Anweisungen zur Ausführung der Schritte des Verfahrens nach irgendeinem der vorangehenden Ansprüche 1 bis 10, wenn dieses Computerprogramm auf einem Computer eines eingebetteten Messsystems (1) nach irgendeinem der vorangehenden Ansprüche 11 bis 20 ausgeführt wird und dadurch, dass Schritt c) von einer Bildverarbeitungssoftware ausgeführt wird.

## Claims

1. Method for measuring the gauge (G) of a road convoy (2) transporting a loading (6) and comprising a leading vehicle (3) and at least one following towed vehicle (4), said method being **characterised in that** it uses an onboard measurement system (1) with a gauge (G) comprising a vertical telescopic mast (7) equipped at its upper end with an optical device (8) comprising an optical digital imaging system (9), and **in that** it comprises the following steps:
a) moving the optical device (8) in vertical upward translation from its retracted low position to its measuring high position;
b) taking images by means of the optical digital imaging system (9) of at least the upper part of the vehicle (3, 4) of the road convoy (2) for which it is sought to measure the loading height;
c) determining, by means of the user or by means of image processing software, the loading height (C) of said vehicle (3, 4) from the images obtained in step b);
d) calculating the gauge (G) of the road convoy (2) from the distance relative to the ground (5) of the optical digital imaging system (9) and from the loading height (C) determined in step c).

2. Measuring method according to the preceding claim, **characterised in that** it comprises the following additional successive steps provided before step b):
- determining the relative pitching incline between the leading vehicle (3) and the towed vehicle (4);
- inclining in elevation of the optical digital imaging system (9) such that its central optical axis is parallel to the longitudinal axis along which the vehicle (3, 4) of the road convoy (2) extends, of which it is sought to measure the loading height (C)..

3. Measuring method according to any one of the preceding claims, **characterised in that** it comprises the following additional successive steps provided before step d):
i) measuring the actual distance of the telescopic mast (7) relative to the ground (5) in order to determine the distance relative to the ground (5) of the optical digital imaging system (9).

4. Measuring method according to any one of the preceding claims, **characterised in that** it comprises the following additional successive steps provided before step d):
α) pivoting the optical device (8) through 360° about its vertical pivot axis;
β) taking images by means of the optical digital imaging system (9) of at least the upper part of the vehicle (4, 3) of the road convoy (2) distinct from the vehicle (4, 3), the loading height (C) of which was determined during step c);
γ) determining, by means of the user or by means of image processing software, the loading height (C) of said vehicle (4, 3) from the images obtained in step β);
δ) calculating the gauge (G) of the road convoy (2) from the distance relative to the ground (5) of the optical digital imaging system (9) and from the loading heights (C) determined in steps c) and γ).

5. Measuring method according to any one of the preceding claims, **characterised in that** it comprises the following additional successive step provided after step d) or δ):
e) displaying, in augmented reality, the gauge (G) on at least one of the images obtained by the optical digital imaging system (9), this display being in the form of a virtual representation intended for the operator.

6. Measuring method according to any one of the preceding claims, **characterised in that**, during steps c) and/or γ), image processing algorithms perform the following successive operations:
- automatically classifying regions of the image which contain one or more of the loads coming from the loading (6) of the convoy (2);
- identifying among the regions thus classified that which belongs to the highest load of the convoy (2);
- extracting the contours of said highest load of this region from the region that belongs to the highest load of the convoy (2); and
- determining the pixel coordinates in the image of the pixel or of the centroid of the group of pixels which designates the highest point of the loading (6).

7. Measuring method according to the preceding claim, **characterised in that** the pixel coordinates in the image of the pixel or of the centroid of the group of pixels which designates the highest point of the loading are provided by an electronic device (18) to an electromechanical assembly of the telescopic mast (7) comprising a movement device (15) moving the optical device (8) in vertical translation, such that said electromechanical assembly positions the optical centre of the optical digital imaging system (9) on the coordinate of the pixel or centroid representing the highest element of the convoy (2).

8. Measuring method according to claim 6 or 7, **characterised in that** the automatic classification of the regions of the image which contain one or more of the loads coming from the loading (6) is based on an image processing which, on the basis of an input image, delimits zones obeying at least one same chosen criterion.

9. Measuring method according to the preceding claim, **characterised in that** the image processing algorithms use an image database in order to determine, from a set of criteria, that or those which make(s) it possible to identify the type of load sought.

10. Measuring method according to claim 7, **characterised in that** it uses an algorithm which calculates the error or the deviation between the current position of the optical centre of the optical system (9) and the coordinate to be reached and which develops a law for controlling the device (15) for vertically translating the electromechanical assembly from this position error and from the kinematic model of the system, control law generating the movements of the optical system (9) in order to minimise or cancel the previously defined position error.

11. Onboard measuring system (1) provided to implement the method according to any one of claims 1 to 10, said system (1) comprising a vertical telescopic mast (7) equipped at its upper end with an optical device (8) comprising an optical digital imaging system (9), said system (1) being **characterised in that**:
- the telescopic mast (7) is adapted to be fixed to one of the vehicles (3, 4) of the road convoy (2), at a distance relative to the ground (5) acting as a reference height (R) for calculating the gauge (G);
- the telescopic mast (7) comprises an electromechanical assembly which comprises a device (15) for vertically translating the optical device (8) between a retracted low position and at least one high measuring position;
- the onboard measuring system (1) comprises an electronic device (18) which controls and communicates with the optical digital imaging system (9) and the electromechanical assembly of the telescopic mast (7), which controls the movements and the operation of the optical device (8).

12. Onboard measuring system (1) according to the preceding claim, **characterised in that** the system (1) further comprises a device for determining the relative pitching incline between the leading vehicle (3) and the towed vehicle (4), and **in that** said device for determining the relative incline communicates with the electronic device (18).

13. On-board measuring system (1) according to the preceding claim, **characterised in that** the device for determining the relative pitching incline between the leading vehicle (3) and the towed vehicle (4) comprises:
- a first inclinometer (10) intended to be fixed to the leading vehicle (3) and a second inclinometer (11) intended to be fixed to the towed vehicle (4); or
- an incline measuring encoder intended to equip the hinge connecting the leading vehicle (3) to the towed vehicle (4).

14. Onboard measuring system (1) according to any one of claims 11 to 13, **characterised in that**:
- the electromechanical assembly of the telescopic mast (7) comprises a movement device (16) for angularly pivoting in a vertical plane, which inclines the optical digital imaging system (9) in elevation, said movement device (16) communicating with the electronic device (18) and being driven by it;
- the optical digital imaging system (9) comprises either a third inclinometer (20) or an incline measuring encoder, which determines the tilt angle in elevation of the optical digital imaging system (9), said third inclinometer (20) or said incline measuring encoder communicating with the electronic device (18).

15. Onboard measuring system (1) according to any one of claims 11 to 14, **characterised in that** the electromechanical assembly of the system (1) comprises a movement device (19) for angularly pivoting in a horizontal plane which pivots the optical digital imaging system (9) in azimuth, said movement device (19) communicating with the electronic device (18) and being driven by it.

16. Onboard measurement system (1) according to the preceding claim, **characterised in that** the device (19) for angularly pivoting the optical device (8) in a horizontal plane is adapted to orient the optical digital imaging system (9) through 360° about the vertical pivot axis (A).

17. Onboard measuring system (1) according to any one of claims 11 to 16, **characterised in that** it further comprises at least one device (5) for measuring height relative to the ground (5), intended to be mounted on the leading vehicle (3) and/or the following towed vehicle (4) and which calculates the actual distance of the telescopic mast (7) relative to the ground (5) acting as a reference height (R) for calculating the gauge (G), this measuring device communicating with the electronic device (18) and being controlled by it.

18. Onboard measuring system (1) according to the preceding claim, **characterised in that** the device (5) for measuring height relative to the ground (5) comprises an optical sensor which measures the distance separating it from the ground (5) or a pressure sensor which measures the pressure in the suspension bellows of the leading vehicle (3) and/or of the following towed vehicle (4), the electronic device (18) deducing the collapsing of the suspensions from the measured pressures.

19. Onboard measuring system (1) according to any one of claims 11 to 18, **characterised in that** it comprises a man-machine interface (24) whichdrives and communicates with the electronic device (18).

20. Onboard measuring system (1) according to any one of claims 11 to 19, **characterised in that** the optical digital imaging system (9) comprises infrared LEDs.

21. Computer program comprising program code instructions for executing the steps of the method according to any one of claims 1 to 10 when said computer program is executed on a computer of an onboard measuring system (1) according to any one of claims 11 to 20, and **characterised in that** step c) is performed by image processing software.
